(19) Europäisches Patentamt
European Patent Office
Office européen des brevets

(11) EP 1 150 374 A1

(12) EUROPEAN PATENT APPLICATION

(43) Date of publication:
**31.10.2001 Bulletin 2001/44**

(51) Int Cl.⁷: **H01M 10/40**

(21) Application number: **01110350.4**

(22) Date of filing: **26.04.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **27.04.2000 JP 2000132925**

(71) Applicant: **SONY CORPORATION**
**Tokyo (JP)**

(72) Inventors:
- **Shibuya, Mashio, c/o Sony Corporation Tokyo (JP)**
- **Suzuki, Yusuke, c/o Sony Corporation Tokyo (JP)**

(74) Representative: **MÜLLER & HOFFMANN**
**Patentanwälte**
**Innere Wiener Strasse 17**
**81667 München (DE)**

# (54) Gel electrolyte and gel electrolyte battery

(57) A gel electrolyte in which nonaqueous electrolytic solution having a lithium-containing electrolyte salt dissolved in a nonaqueous solvent is gelled by a matrix polymer. The gel electrolyte includes a halogen substituted ethylene carbonate obtained by replacing one or more hydrogen atoms of ethylene carbonate by halogens. Since the halogen substituted ethylene carbonate (for instance, fluorinated ethylene carbonate) is extremely low in its reactivity with a negative electrode, a loss capacity is small so that it is very effective for obtaining a high capacity. Further, the halogen substituted ethylene carbonate has a melting point lower than that of ethylene carbonate, it can realize a large capacity with less deterioration of a low temperature performance than that of ethylene carbonate.

Accordingly, a strength, a liquid retaining characteristic, a stability relative to the negative electrode, a battery capacity, a cyclic characteristic a load characteristic and a low temperature characteristic can be improved.

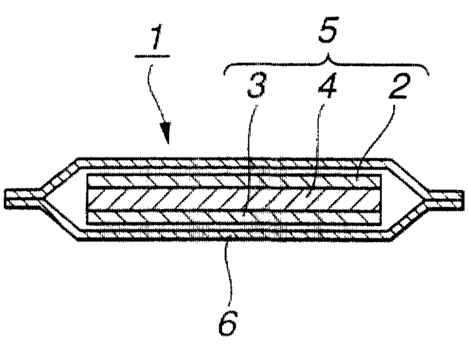


**FIG.2**

EP 1 150 374 A1

## Description

### BACKGROUND OF THE INVENTION

### Field of the Invention

The present invention relates to a gel electrolyte in which nonaqueous electrolytic solution having lithium-containing electrolyte salt dissolved in a nonaqueous solvent is gelled by a matrix polymer and a gel electrolyte battery using it.

### Description of Prior Art

A battery has hitherto occupied an important position as a power supply of a portable electronic device from an industrial point of view. In order to realize a compact and light device, it has been necessary to make the battery light and efficiently use an accommodation space in the device. A lithium battery large in its energy density and output density is most suitable for meeting the above described demand.

A battery high in its degree of flexilility for a configuration, or a thin sheet type battery with a large area and a thin card type battery with a small area have been desired among various types of batteries. However, it has been difficult to manufacture a thin battery with a large area in accordance with a method for employing a metallic can as an outer casing which has been hitherto used.

For the purpose of solving the above described problem, batteries employing organic/inorganic solid electrolytes or a gel electrolyte using a high polymer gel have been studied. Since the electrolytes are fixed in these batteries, the thickness of the electrolytes is fixed so that an adhesive strength exists between electrodes and the electrolytes to hold a contact therebetween. Therefore, it is not necessary to close electrolytic solution by an metallic outer casing or to exert pressure on a battery element. Accordingly, a film type outer casing can be used and the thickness of the battery can be decreased.

Since an all-solid electrolyte is low in its ionic conductivity so that it is hardly put into practical use for a battery. Therefore, the gel electrolyte has been considered to be an effective material. It has been considered that a multilayer film composed of a high polymer film or a metallic thin film is used as an outer casing. Especially, a moisture-proofmultilayer film composed of a heat sealing resin layer or a metallic foil layer is preferable as a candidate of an outer casing material from the viewpoints that a sealed structure can be easily realized by a hot seal, and the multilayer film itself is excellent in its strength or airtightness and lighter, thinner and more inexpensive than the metallic outer casing.

However, when the nonaqueous solvent in the gel electrolyte is not a solvent having a compatibility with the matrix polymer, it will not form a gel electrolyte. Further, in case the film is employed for the outer casing of the battery, when a solvent having a low boiling point is used, there exists a fear that the internal pressure of the battery is increased due to the rise of the steam pressure of the solvent to generate an expansion when the battery is placed under an environment of high temperature. Therefore, the selection of the solvent is restricted.

In a lithium-ion battery, a low boiling point solvent such as dimethyl carbonate, ethylmethyl carbonate and diethyl carbonate is utilized. Since these materials are low in their viscosities, they are effective to improve the ionic conductivity of the electrolyte at low temperature. Further, since they are low in their reactivities with a graphite negative electrode, a capacity loss due to the reduction and decomposition of the solvent is not generated at the time an initial charging. However, as described above, since there exists a limitation for selecting a solvent because of the compatibility and the boiling point, a large quantity of these materials cannot be employed for the gel electrolyte battery using the multilayer film for the outer casing.

As the solvent for the gel electrolyte for the battery, ethylene carbonate (EC), propylene carbonate (PC), and the like can be employed as materials which are high in their boiling points and do not generate such decomposition reactions as to deteriorate a battery performance. Since the EC has a high melting point as high as 38°C, the ionic conductivity thereof is deteriorated at low temperature. In order to ensure a low temperature performance without using a solvent with low viscosity, a large amount of PC needs to be used. However, since the PC has a high reactivity with the graphite material of the negative electrode, the PC generates a useless reaction upon charging to cause the capacity of the battery to be lowered (energy density is lowered). For preventing the capacity of the battery from being lowered, the EC is desirably increased. However, in order to assuredly maintain the low temperature performance, a solvent whose melting point is lower than that of the EC and whose reactivity with the negative electrode is extremely low has been needed.

### SUMMARY OF THE INVENTION

The present invention was proposed by considering the above described circumstances and it is an object

of the present invention to provide a gel electrolyte excellent in its strength, liquid retaining property and stability relative to a negative electrode, and a gel electrolyte battery in which the capacity of a battery, a cyclic characteristic, a load characteristic and a low temperature characteristic can be satisfied by employing the gel electrolyte.

According to one aspect of the present invention, there is provided a gel electrolyte in which nonaqueous electrolytic solution having a lithium-containing electrolyte salt dissolved in a nonaqueous solvent is gelled by a matrix polymer, wherein the gel electrolyte includes a halogen substituted ethylene carbonate obtained by replacing one or more hydrogen atoms of ethylene carbonate expressed by a chemical formula 1 as described below by halogens.

[Chemical Formula 1]

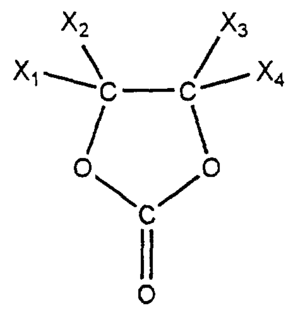

(In the formula, at least one of $X_1$, $X_2$, $X_3$ and $X_4$ is a halogen atom and the rest of them is composed of hydrogen atoms.)

Further, according to another aspect of the present invention, there is provided a gel electrolyte battery including: a negative electrode having any one of lithium metal, lithium alloy or a carbon material with which lithium can be doped and/or dedoped; a positive electrode having a compound oxide including lithium and transition metal and a gel electrolyte provided between the negative electrode and the positive electrode, wherein the gel electrolyte is a gel electrolyte of a type that nonaqueous electrolytic solution having a lithium-containing electrolyte salt dissolved in a nonaqueous solvent is gelled by a matrix polymer, and the gel electrolyte includes halogen substituted ethylene carbonate obtained by replacing one or more hydrogen atoms of ethylene carbonate expressed by a chemical formula 2 as described below by halogens.

[Chemical Formula 2]

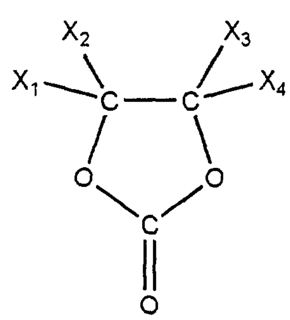

(In the formula, at least one of $X_1$, $X_2$, $X_3$ and $X_4$ is a halogen atom and the rest of them is composed of hydrogen atoms.)

Further, according to still another aspect of the present invention, there is provided a gel electrolyte battery including: a negative electrode having any one of lithium metal, lithium alloy or a carbon material with which lithium can be doped and/or dedoped; a positive electrode having a compound oxide including lithium and transition metal; a

gel electrolyte interposed between the negative electrode and the positive electrode and an outer casing material composed of a laminate film; wherein the gel electrolyte is a gel electrolyte of a type that nonaqueous electrolytic solution having a lithium-containing electrolyte salt dissolved in a nonaqueous solvent is gelled by a matrix polymer, and the gel electrolyte includes halogen substituted ethylene carbonate obtained by replacing one or more hydrogen atoms of ethylene carbonate expressed by a chemical formula 3 as described below by halogens.

[Chemical Formula 3]

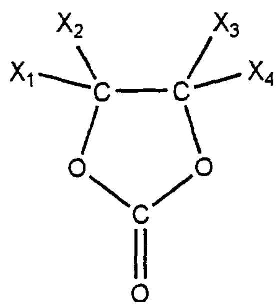

(In the formula, at least one of $X_1$, $X_2$, $X_3$ and $X_4$ is a halogen atom and the rest of them is composed of hydrogen atoms.)

## BRIEF DESCRIPTION OF THE DRAWINGS

The object and other objects and advantages of the present invention will appear more clearly from the following specification in conjunction with the accompanying drawings in which:

Fig. 1 is a schematic plan view showing one structural example of a gel electrolyte battery according to the present invention.
Fig. 2 is a schematic sectional view of the gel electrolyte battery.

## DETAILED DESCRIPTION OF THE PREFERRED EMBODIMENT

Now, a gel electrolyte and a gel electrolyte battery to which the present invention is applied will be described in detail.

One structural example of a gel electrolyte battery according to the present invention is shown in Figs. 1 and 2.

This gel electrolyte battery 1 includes a strip positive electrode 2, a strip negative electrode 3 arranged at a position opposed to the positive electrode 2 and a gel electrolyte layer 4 disposed between the positive electrode 2 and the negative electrode 3. In the gel electrolyte battery 1, a rolled electrode body 5 which has the positive electrode 2 and the negative electrode 3 laminated through the gel electrolyte layer 4 and is rolled in the longitudinal direction is covered and sealed with an outer casing film 6 made of an insulating material. A positive electrode terminal 7 is connected to the positive electrode 2 and a negative electrode terminal 8 is connected to the negative electrode 3, respectively. The positive electrode terminal 7 and the negative electrode terminal 8 are held in between an opening seal part as the peripheral edge part of the outer casing film 6.

In the positive electrode 2, positive electrode active material layers containing a positive electrode active material are formed on both surfaces of a positive electrode current collector. As the positive electrode current collector, for instance, a metallic foil such as an aluminum foil is employed,

The positive electrode active material layer is formed as described below. Initially, for instance, the positive active material, a conductive material and a binding material are uniformly mixed together to obtain a positive electrode compound agent and this positive electrode compound agent is dispersed in a solvent to make slurry. Then, this slurry is uniformly applied to the positive electrode current collector by a doctor blade method or the like and the slurry is dried at high temperature to blow off the solvent and form the positive electrode active material layer. In this case, the positive electrode active material, the conductive material, the binding material and the solvent are preferably uniformly dispersed irrespective of a mixture ratio.

Here, as the positive electrode active material, a compound oxide of lithium and transition metal is used, More

specifically, as the positive electrode active material, there are exemplified $LiCoO_2$, $LiNiO_2$, $LiMn_2O_4$, or the like. Further, solid solution in which a part of a transition metal element is replaced by another element can be employed. As examples thereof, there may be exemplified $LiNi_{0.5}Co_{0.5}O_2$, $LiNi_{0.8}Co_{0.2}O_2$, or the like.

Further, as the conductive material, for instance, a carbon material or the like is employed. As the binding material, for instance, polyvinylidene fluoride or the like is employed, As the solvent, for instance, N-methylpyrrolidone or the like.

Further, the positive electrode 2 is provided with the positive electrode terminal 7 connected to the other end in the longitudinal direction by a spot welding method or an ultrasonic welding method. This positive electrode terminal 7 may be desirably composed of a metallic foil or a mesh material. However, it is to be understood that the positive electrode terminal may be composed of an electrochemically and chemically stable and conductive material except metal. As a material of the positive electrode terminal 7, for instance, aluminum or the like may be used.

The positive electrode terminal 7 is desirably directed to the same direction as that of the negative electrode terminal 8. However, it is to be noted that the positive electrode terminal 7 may be directed to any direction, if a short-circuit or the like is not generated and any trouble is not generated in a battery performance. A position to which the positive electrode terminal 7 is connected and a method for attaching the positive electrode terminal 7 are not limited to the above described examples, if an electric contact is achieved.

Further, in the negative electrode 3, negative electrode active material layers containing a negative electrode active material are formed on both surfaces of a negative electrode current collector. As the negative electrode current collector, for instance, a metallic foil such as a copper foil or the like is employed,

The negative electrode active material layer is formed as described below. Initially, for instance, the negative active material, a conductive material as required and a binding material are uniformly mixed together to obtain a negative electrode compound agent and this negative electrode compound agent is dispersed in a solvent to make slurry. Then, this slurry is uniformly applied to the negative electrode current collector by a doctor blade method or the like and the slurry is dried at high temperature to blow off the solvent and form the negative electrode active material layer. In this case, the negative electrode active material, the conductive material, the binding material and the solvent are preferably uniformly dispersed in the solvent irrespective of a mixture ratio.

Here, as the negative electrode active material, lithium metal, lithium alloy or a carbon material with which lithium can be doped and/or dedoped is employed. More specifically, as the carbon material with which lithium can be doped and/or dedoped, graphite, non-graphitizable carbon, graphitizable carbon, or the like may be used. As graphites, artificial graphites or natural graphites such as mesophase carbon microbeads, carbon fibers, cokes, or the like can be employed.

As the binding material, for instance, polyvinylidene fluoride, styrene butadiene rubber or the like is employed, As the solvent, for instance, N-methylpyrrolidone, methyl ethyl ketone or the like is employed.

Further, the negative electrode 3 is provided with the negative electrode terminal 8 connected to the other end in the longitudinal direction by a spot welding method or an ultrasonic welding method. This negative electrode terminal 8 may be desirably composed of a metallic foil or a mesh material. However, it is to be understood that the negative electrode terminal 8 may be composed of an electrochemically and chemically stable and conductive material except metal. As a material of the negative electrode terminal 8, for instance, copper, nickel or the like may be used.

The negative electrode terminal 8 is desirably directed to the same direction as that of the positive electrode terminal 7. However, it is to be noted that the negative electrode terminal 8 may be directed to any direction, if a short-circuit or the like is not generated and any trouble is not generated in a battery performance. A position to which the negative electrode terminal 8 is connected and a method for attaching the negative electrode terminal 8 are not limited to the above described examples, if an electric contact is achieved.

A gel electrolyte includes a nonaqueous solvent, an electrolyte salt and a matrix polymer. As described below, in the gel electrolyte battery l according to the present invention, fluorinated vinylene carbonate is contained in the gel electrolyte.

As the nonaqueous solvent, a well-known solvent employed as the nonaqueous solvent of nonaqueous electrolytic solution can be used. More specifically, there are exemplified ethylene carbonate, propylene carbonate, γ-butyrolactone, dimethyl carbonate, diethyl carbonate, ethyl methyl carbonate, dipropyl carbonate, ethyl propyl carbonate or solvents obtained by replacing hydrogens of these carbonates by halogens, or the like.

Only one kind of solvent may be individually used or a plurality of kinds of solvents may be mixed together with a prescribed composition.

As the lithium-containing electrolyte salt, the salt of a type which can be dissolved in the above described solvent can be employed. For instance, there are enumerated $LiPF_6$, $LiBF_4$, $LiN(CF_3SO_2)_2$, $LiN(C_2F_5SO_2)_2$, $LiC(CF_3SO_2)_3$, $LiC(C_2F_5SO_2)_3$, and $LiClO_4$, or the like.

As the concentration of the lithium-containing electrolyte salt, a concentration under which the lithium-containing electrolyte salt can be dissolved in the solvent may be employed with no difficulty. The lithium-containing electrolyte salt may be preferably included in the nonaqueous solvent so that the concentration of lithium ions relative to

the nonaqueous solvent is located within a range from 0.4 mol/kg or more to 1.5 mol/kg or lower. When the concentration of lithium ions of the electrolyte salt relative to the solvent exceeds 1.5 mol/kg, the low temperature characteristic and the cyclic characteristic of the gel electrolyte battery 1 are deteriorated. Further, when the concentration of the lithium ions of the electrolyte salt relative to the solvent is lower than 0.4 mol/kg, a sufficient capacity cannot be ensured.

The matrix polymer serves to gelatinize nonaqueous electrolytic solution in which the above described electrolyte salt is dissolved in the nonaqueous solvent. As such a matrix polymer, there is exemplified a polymer containing on a repetition basis at least one kind of polyvinylidene fluoride, polyethylene oxide, polypropylene oxide, polyacrylonitrile and polymethacrylonitrile. One kind of such a polymer may be individually used or two kinds or more of polymers may be mixed and the mixture may be used.

Especially, as the matrix polymer, is most preferably used polyvinylidene fluoride or a copolymer in which hexafluoro propylene is introduced into polyvinylidene fluoride at the rate of 7.5 % or lower relative thereto on the basis of a monomer weight ratio. The above mentioned polymer has the number-average molecular weight ranging from $5.0 \times 10^5$ to $7.0 \times 10^5$ (500000 to 700000) or the weight-average molecular weight ranging from $2.1 \times 10^5$ to $3.1 \times 10^5$ (210000 to 310000). The above polymer has an intrinsic viscosity located within a range of 1.7 to 2.1.

The outer casing film 6 serves to seal and pack the rolled electrode body 5 which has the positive electrode 2 and the negative electrode 3 laminated through the gel electrolyte layer 4 and is rolled in the longitudinal direction.

This outer casing film is composed of a moisture-proof and insulating multilayer in which, for instance, an aluminum foil is sandwiched in between a pair of resin films.

In the gel electrolyte battery according to the present invention, halogen substituted ethylene carbonate obtained by replacing hydrogen atoms by halogen atoms such as fluorinated ethylene carbonate is included in the gel electrolyte. For instance, the fluorinated ethylene carbonate is added to the gel electrolyte, so that the chemical stability of the gel electrolyte relative to the negative electrode can be improved. Then, the gel electrolyte excellent in its chemical stability relative to the negative electrode is used, so that the initial charging and discharging efficiency of the gel electrolyte battery can be improved and a high battery capacity can be obtained.

Further, when the fluorinated ethylene carbonate is compared with ethylene carbonate which is similarly excellent in its chemical stability relative to the negative electrode and can get a high battery capacity, the former has a melting point as low as 20°C to 30°C, so that the former carbonate has a higher ion conductivity at low temperature than that of the ethylene carbonate. Therefore, the gel electrolyte battery using the fluorinated ethylene carbonate constitutes a battery excellent in discharging performance at low temperature.

Further, as described above, it is one of great advantages to use a light multilayer film as the outer casing of the gel electrolyte battery. However, when a solvent having low viscosity is employed as in a lithium-ion secondary battery using ordinary liquid, in case ofthe environmental temperature ofthe battery becomes high, the solvent of low viscosity will be vaporized, because its boiling point is low. Thus, in the gel electrolyte battery using the multilayer film as the outer casing, there has been a serious problem that the battery undesirably expands or swells.

The inventors of the present invention found a method for achieving the high charging and discharging efficiency as described above without using the solvent of the low boiling point which causes an expansion of the battery by adding the fluorinated ethylene carbonate to the gel electrolyte.

Although the quantitative range of the above described halogen substituted ethylene carbonate is not especially restricted, 80 % or lower of the halogen substituted ethylene carbonate is desirably included relative all the solvent on a weight ratio basis, because the melting point of fluorine-mono-substituted substance is 17°C and the melting point oftrans-di-substituted substance is about 8°C, and 50 % or lower of the halogen substituted ethylene carbonate is desirably included, when an importance is attached to the low temperature performance. In order to realize an effect for increasing the capacity, 5 % or more of the halogen substituted ethylene carbonate is needed at minimum and 10 % or more is desirably needed.

Since the fluorinated ethylene carbonate is included in the gel electrolyte according to the present invention as described above, the reactivity thereof with the graphite negative electrode is lower than that of EC. When the fluorinated ethylene carbonate is employed in a lithium-ion battery, a battery which can achieve a high initial charging and discharging efficiency and is excellent in its battery capacity and energy density can be manufactured. Further, since the melting point of the fluorinated EC is lower than that of EC, the low temperature performance can be also ensured.

The PC (propylene carbonate) has a high ion conductivity at low temperature but it has a high reactivity with the negative electrode to lower the battery capacity. However, the fluorinated EC (ethylene carbonate) can assuredly hold the high charging and discharging efficiency and battery capacity even when a large amount of PC is included. Accordingly, the electrolyte in which the low temperature characteristic and large current characteristic can be improved by increasing the PC and the excellent ion conductivity can be realized within a wide range of temperature can be provided.

In this connection, in the gel electrolyte battery 1, a separator may be disposed in the gel electrolyte layer 4. The separator is provided in the gel electrolyte layer 4, so that an internal short-circuit due to the contact between the

positive electrode 2 and the negative electrode 3 can be prevented.

Further, in the gel electrolyte battery 1, resin pieces 9 may be arranged in parts where the outer casing film 6 comes into contact with the positive electrode terminal 7 and the negative electrode terminal 8, respectively. The resin pieces 9 are provided in the parts where the outer casing film 6 comes into contact with the positive electrode terminal 7 and the negative electrode terminal 8, so that a short-circuit owing to burrs of the outer casing film 6 is prevented and the adhesive property between the outer casing film 6 and the positive electrode terminal 7 and the negative electrode terminal 8 is improved.

Further, in the above described embodiment, although the rolled electrode body 5 which has the strip positive electrode 2 and the strip negative electrode 3 laminated through the gel electrolyte layer 4 and is rolled in the longitudinal direction is employed for the gel electrolyte battery 1, it is to be understood that the present invention is not limited thereto and a laminated type electrode body in which a positive electrode is laminated on a negative electrode through a gel electrolyte layer may be utilized, or a zigzag folded type electrode body which is not rolled but, what is called, folded in a zigzag manner may be applied.

The configuration of the gel electrolyte battery 1 as. described above is not specially limited to a cylindrical type, a rectangular type or the like, and various kinds of size of batteries such as a thin type, a large type, or the like can be employed.

Examples

For recognizing the effects of the present invention, the gel electrolyte batteries having the above described configurations were manufactured and the characteristics thereof were examined and evaluated in the examples described below.

<Sample 1>

Initially, a positive electrode was formed in such a manner as mentioned below.

In order to manufacture the positive electrode, 92 wt% of lithium cobaltate ($LiCoO_2$), 3 wt% of powdered polyvinylidene fluoride and 5 wt% of powdered graphite were dispersed in N-methylpyrrolidone to prepare a slurry type positive electrode compound agent. Then, this positive electrode compound agent was uniformly applied to both the surfaces of an aluminum foil as a positive electrode current collector. The positive electrode compound agent was dried at 100°C for 24 hours under a condition of reduced pressure to form a positive electrode active material layer. Then, the obtained product was pressed by a roll press to obtain a positive electrode sheet. The positive electrode sheet was cut out to a strip form of 50 mm × 300 mm and employ the strip as a positive electrode. A lead made of an aluminum ribbon was welded to a part to which the active material was not applied.

Subsequently, a negative electrode was manufactured in such a manner as described below.

In order to manufacture the negative electrode, 91 wt% of artificial graphite and 9 wt% of powdered polyvinylidene fluoride were dispersed in N-methylpyrrolidone to prepare a slurry type negative electrode compound agent. Then, this negative electrode compound agent was uniformly applied to both the surfaces of a copper foil serving as a negative electrode current collector. The negative electrode compound agent was dried at 120°C for 24 hours under a condition of reduced pressure to form a negative electrode active material layer. Then, the obtained product was pressed by a roll press to form a negative electrode sheet. The negative electrode sheet was cut out to a strip form of 52 mm X 320 mm and use it as a negative electrode. A lead made of a nickel ribbon was welded to a part to which the active material was not applied.

Then, a gel electrolyte layer was formed on the positive electrode and the negative electrode manufactured as described above. In order to form the gel electrolyte layer, initially, polyvinylidene fluoride to which hexafluoro propylene was copolymerized at the rate of 6.9 %, nonaqueous electrolytic solution and a dimethyl carbonate are mixed, agitated and dissolved together to obtain sol state electrolytic solution.

Here, as the nonaqueous electrolytic solution, $LiPF_6$ was dissolved at the rate of 0.85 mol/kg in a mixed solvent in which ethylene carbonate (EC), mono-fluorinated ethylene carbonate (F1-EC) and propylene carbonate (PC) were mixed together in the weight ratio 4 : 2 : 4.

Subsequently, the obtained sol electrolytic solution was uniformly applied to both the surfaces of the positive electrode and the negative electrode. Then, the electrolytic solution was dried to remove the solvent. In such a way, the gel electrolyte layers were formed on both the surfaces of the positive electrode and the negative electrode.

Then, the strip positive electrode having the gel electrolyte layers formed on both surfaces thereof and the strip negative electrode having the gel electrolyte layers formed on both surfaces thereof were laminated together to form a laminated body. Further, the laminate body was rolled in the longitudinal direction thereof to obtain a rolled electrode body.

Finally, this rolled electrode body was held by an outer casing film formed by holding an aluminum foil in

between a pair of resin films. The outer peripheral edge parts of the outer casing film were heat-sealed under reduced pressure to seal an opening and seal the rolled electrode body in the outer casing film. At this time, the parts of a positive electrode terminal and a negative electrode terminal to which resin pieces were applied were inserted and held by the opening parts sealed by the outer casing film to completely form a gel electrolyte battery.

<Samples 2 to 52>

The gel electrolyte batteries were completed in the same manner as that of the sample 1 except that the compositions (compositions of solvents, concentrations of salts, kinds of salts, kinds of high polymers) of the nonaqueous electrolytic solution for constituting the sol electrolytic solution were illustrated in Tables 1 to 8.

In a sample 50, as a matrix polymer, polyacrylonitrile was used. Polyacrylonitrile having a molecular weight of 200000, EC, F 1-EC, PC and $LiPF_6$ were mixed together at the rate of a weight ratio 1 : 10 : 1 and the polymer was dissolved at 90°C. The obtained sol electrolytic solution was applied to the electrodes in the same manner as that of the sample 1, and then, the applied electrolytic solution was gradually cooled to be gelled. Then, the strip positive electrode and the strip negative electrode on which the gel electrolyte layers were formed were laminated through a separator made of porous polyolefin to form a laminated body. Further, the laminated body was rolled in the longitudinal direction thereof to obtain a rolled electrode body. This rolled electrode body was sealed in an outer casing film in the same manner as that of the sample 1.

In a sample 51, polyethylene oxide having a molecular weight of 1000000 was used to prepare sol electrolytic solution in the same manner as that of the sample 50. In a sample 52, the mixture of polyacrylonitrile having a molecular weight of 200000 and polymethacrylonitrile having a molecular weight of 180000 was used to prepare sol electrolytic solution in the same manner as that of the sample 50 in respect of other points.

In the Tables, F2-EC designates di-fluorinated ethylene carbonate.

In Tables 1 to 8 shown below, the compositions of solvents of nonaqueous electrolytic solution of samples 1 to 52 are illustrated. When materials of electrodes or electrolyte salts or the like are different from those of the sample 1, they were shown in the tables. When there is specifically no description, this means the same conditions as those of the sample 1.

[Tables 1]

| Sample No. | EC | F1-EC | PC |
|---|---|---|---|
| 1 | 0.2 | 0.0 | 0.8 |
| 2 | 0.5 | 0.0 | 0.5 |
| 3 | 0.8 | 0.0 | 0.2 |
| 4 | 0.2 | 0.1 | 0.7 |
| 5 | 0.4 | 0.1 | 0.5 |
| 6 | 0.5 | 0.1 | 0.4 |
| 7 | 0.7 | 0.1 | 0.2 |
| 8 | 0.2 | 0.2 | 0.6 |
| 9 | 0.4 | 0.2 | 0.4 |
| 10 | 0.6 | 0.2 | 0.2 |
| 11 | 0.2 | 0.4 | 0.4 |
| 12 | 0.4 | 0.4 | 0.2 |
| 13 | 0.2 | 0.6 | 0.2 |

[Tables 2]

| Sample No. | EC | F2-EC | PC |
|---|---|---|---|
| 14 | 0.2 | 0.2 | 0.6 |
| 15 | 0.4 | 0.2 | 0.4 |

[Tables 2] (continued)

| Sample No. | EC | F2-EC | PC |
|---|---|---|---|
| 16 | 0.6 | 0.2 | 0.2 |
| 17 | 0.2 | 0.4 | 0.4 |
| 18 | 0.4 | 0.4 | 0.2 |

[Tables 3]

| Sample No. | EC | F1-EC | DEC |
|---|---|---|---|
| 19 | 0.2 | 0.2 | 0.6 |
| 20 | 0.4 | 0.2 | 0.4 |
| 21 | 0.6 | 0.2 | 0.2 |
| 22 | 0.2 | 0.4 | 0.4 |
| 23 | 0.4 | 0.4 | 0.2 |

[Tables 4]

| Sample No. | EC | F1-EC | EMC |
|---|---|---|---|
| 24 | 0.2 | 0.2 | 0.6 |
| 25 | 0.4 | 0.2 | 0.4 |
| 26 | 0.6 | 0.2 | 0.2 |
| 27 | 0.2 | 0.4 | 0.4 |
| 28 | 0.4 | 0.4 | 0.2 |

[Tables 5]

| Sample No. | EC | F1-EC | DMC |
|---|---|---|---|
| 29 | 0.2 | 0.2 | 0.6 |
| 30 | 0.4 | 0.2 | 0.4 |
| 31 | 0.6 | 0.2 | 0.2 |
| 32 | 0.2 | 0.4 | 0.4 |
| 33 | 0.4 | 0.4 | 0.2 |

[Tables 6]

| Sample No. | EC | F1-EC | PC | $LiPF_6$ concentration mol/kg |
|---|---|---|---|---|
| 34 | 0.5 | 0.2 | 0.3 | 0.3 |
| 35 | 0.5 | 0.2 | 0.3 | 0.4 |
| 36 | 0.5 | 0.2 | 0.3 | 0.5 |
| 37 | 0.5 | 0.2 | 0.3 | 0.6 |
| 38 | 0.5 | 0.2 | 0.3 | 0.8 |
| 39 | 0.5 | 0.2 | 0.3 | 1.0 |
| 40 | 0.5 | 0.2 | 0.3 | 1.2 |

[Tables 6] (continued)

| Sample No. | EC | F1-EC | PC | $LiPF_6$ concentration mol/kg |
|---|---|---|---|---|
| 41 | 0.5 | 0.2 | 0.3 | 1.4 |
| 42 | 0.5 | 0.2 | 0.3 | 1.6 |
| 43 | 0.5 | 0.2 | 0.3 | 1.7 |
| 44 | 0.5 | 0.2 | 0.3 | 1.8 |
| 45 | 0.5 | 0.2 | 0.3 | 1.9 |

[Tables 7]

| Sample No. | EC | F1-EC | PC | Electrolyte salt |
|---|---|---|---|---|
| 46 | 0.5 | 0.2 | 0.3 | $LiBF_4$ |
| 47 | 0.5 | 0.2 | 0.3 | $LiN(CF_3SO_2)_2$ |
| 48 | 0.5 | 0.2 | 0.3 | $LiN(C_2F_5SO_2)_2$ |
| 49 | 0.5 | 0.2 | 0.3 | $LiC(CF_3SO_2)_3$ |

[Tables 8]

| Sample No. | EC | F1-EC | PC | Matrix polymer |
|---|---|---|---|---|
| 50 | 0.5 | 0.2 | 0.3 | PAN |
| 51 | 0.5 | 0.2 | 0.3 | PEO |
| 52 | 0.5 | 0.2 | 0.3 | PMMA+PAN |

There were carried out evaluations on respective characteristics including the cyclic characteristic, the initial charging and discharging efficiency, the low temperature discharging characteristic, the load characteristic and the initial discharging capacity of the gel electrolyte batteries of the samples 1 to 52 manufactured as mentioned above.

In an evaluating method described below, 1C indicates a current value required when a rated capacity of a battery is discharged for one hour. 0.2C. 0.5C and 3C respectively indicates current values required when the rated capacity of the battery is discharged for 5 hours, 2 hours and 20 minutes.

As the cyclic characteristic, the constant current and constant voltage charging of 4.2V and 1C, and a 3V cut-off constant current discharging of 1C were carried out to measure the change of a discharging capacity for each cycle. Here, the rate of maintenance of capacity after 300th cycle was examined and 80% or higher was judged to be good. The rate of maintenance of capacity of 80% after 300th cycle is a value generally required in the specification of a portable electronic device at present.

The cyclic characteristic is expressed by the following equation.

$$\text{Cyclic characteristic} = (\text{discharged capacity of 300th cycle})/(\text{discharged capacity of 5th cycle}) \times 100\ (\%)$$

As the initial charging and discharging efficiency, a constant current and constant voltage charging of 4.2V and 0.1C, a constant current discharging of 0. 1C and an initial charging and discharging test with cut-off of 3V were carried out and the initial charging and discharging efficiency was evaluated on the basis of the values of the capacity of the battery upon charging and discharging at that time. If the obtained value is too small, the wastefulness of an employed active material will be increased. The value of 88 % or higher was judged to be good. The initial charging and discharging efficiency is expressed by the following equation.

Initial charging and discharging efficiency = (initial discharging capacity) /

(initial charging capacity) × 100 (%)

As the low temperature discharging characteristic, a ratio of 0.5C discharging capacity under an environment of - 20°C to 0.5C discharging capacity under an environment of 23°C was evaluated. The obtained value of 40 % or higher was judged to be good. This value is equivalent to the capacity of a battery required for performing an emergent speech at least once by a portable telephone or the like in a cold place at about - 20°C.

The low temperature characteristic is expressed by the following equation.

Low temperature characteristic = (0.5C discharging capacity at - 20°C)/ (0.5C discharging capacity at 23°C) × 100 (%)

As the load characteristic, a ratio of 3C discharging capacity to 0.5C discharging capacity at room temperature was evaluated. When the obtained value is 80 % or higher, this was judged to be good. Since the portable telephone consumes power on the basis of a pulse discharge, a large current performance is required. A value of 80 % or higher is a value necessary for satisfying requisitions for the portable telephone.

The load characteristic is expressed by the following equation.

Load characteristic = (3C discharging capacity)/(0.5C discharging capacity) × 100 (%)

Tables 9 to 16 show the evaluated results of the characteristics including the cyclic characteristic, the initial charging and discharging efficiency, the low temperature discharging characteristic, the load characteristic and the initial discharging capacity of the gel electrolyte batteries of the samples 1 to 52.

[Tables 9]

| Sample No. | Cycle (%) | Efficiency (%) | Low temperature (%) | Load (%) |
|---|---|---|---|---|
| 1 | 73 | 55 | 65 | 91 |
| 2 | 81 | 86 | 36 | 84 |
| 3 | 91 | 91 | 11 | 63 |
| 4 | 80 | 88 | 68 | 94 |
| 5 | 84 | 90 | 61 | 92 |
| 6 | 87 | 91 | 57 | 90 |
| 7 | 91 | 93 | 42 | 87 |
| 8 | 81 | 89 | 63 | 90 |
| 9 | 88 | 93 | 56 | 88 |
| 10 | 92 | 95 | 44 | 86 |
| 11 | 84 | 93 | 57 | 89 |
| 12 | 89 | 95 | 46 | 88 |
| 13 | 85 | 94 | 52 | 87 |

[Tables 10]

| Sample No. | Cycle (%) | Efficiency (%) | Low temperature (%) | Load (%) |
|---|---|---|---|---|
| 14 | 83 | 90 | 65 | 90 |
| 15 | 90 | 94 | 59 | 89 |
| 16 | 93 | 96 | 47 | 88 |

[Tables 10] (continued)

| Sample No. | Cycle (%) | Efficiency (%) | Low temperature (%) | Load (%) |
|---|---|---|---|---|
| 17 | 85 | 95 | 62 | 91 |
| 18 | 91 | 96 | 51 | 88 |

[Tables 11]

| Sample No. | Cycle (%) | Efficiency (%) | Low temperature (%) | Load (%) |
|---|---|---|---|---|
| 19 | 88 | 92 | 70 | 91 |
| 20 | 91 | 95 | 62 | 90 |
| 21 | 94 | 96 | 49 | 89 |
| 22 | 88 | 96 | 66 | 93 |
| 23 | 92 | 96 | 54 | 89 |

[Tables 12]

| Sample No. | Cycle (%) | Efficiency (%) | Low temperature (%) | Load (%) |
|---|---|---|---|---|
| 24 | 87 | 93 | 76 | 91 |
| 25 | 92 | 96 | 68 | 90 |
| 26 | 93 | 95 | 57 | 89 |
| 27 | 89 | 95 | 72 | 93 |
| 28 | 92 | 96 | 68 | 89 |

[Tables 13]

| Sample No. | Cycle (%) | Efficiency (%) | Low temperature (%) | Load (%) |
|---|---|---|---|---|
| 29 | 89 | 94 | 73 | 91 |
| 30 | 90 | 94 | 65 | 90 |
| 31 | 93 | 96 | 53 | 89 |
| 32 | 89 | 96 | 69 | 93 |
| 33 | 93 | 96 | 61 | 89 |

[Tables 14]

| Sample No. | Cycle (%) | Efficiency (%) | Low temperature (%) | Load (%) |
|---|---|---|---|---|
| 34 | 74 | 73 | 24 | 72 |
| 35 | 82 | 88 | 41 | 80 |
| 36 | 86 | 91 | 48 | 84 |
| 37 | 90 | 94 | 50 | 87 |
| 38 | 88 | 94 | 52 | 88 |
| 39 | 89 | 96 | 49 | 85 |
| 40 | 87 | 93 | 47 | 83 |
| 41 | 89 | 90 | 44 | 84 |

[Tables 14] (continued)

| Sample No. | Cycle (%) | Efficiency (%) | Low temperature (%) | Load (%) |
|---|---|---|---|---|
| 42 | 87 | 90 | 42 | 82 |
| 43 | 86 | 88 | 40 | 81 |
| 44 | 83 | 85 | 36 | 77 |
| 45 | 75 | 80 | 29 | 72 |

[Tables 15]

| Sample No. | Cycle (%) | Efficiency (%) | Low temperature (%) | Load (%) |
|---|---|---|---|---|
| 46 | 87 | 89 | 41 | 84 |
| 47 | 88 | 91 | 49 | 85 |
| 48 | 90 | 93 | 52 | 90 |
| 49 | 89 | 92 | 47 | 87 |

[Tables 16]

| Sample No. | Cycle (%) | Efficiency (%) | Low temperature (%) | Load (%) |
|---|---|---|---|---|
| 50 | 88 | 93 | 45 | 88 |
| 51 | 87 | 94 | 43 | 84 |
| 52 | 88 | 93 | 46 | 87 |

As apparent from the Tables, in the gel electrolyte battery using the solvent using the mixture of ethylene carbonate and propylene carbonate, fluorine substituted ethylene carbonate is added to the gel electrolyte, so that the charging and discharging efficiency and the battery capacity can be greatly increased without deteriorating the low temperature performance. Further, even when a large amount of propylene carbonate is included in the solvent, the charging and discharging efficiency and the battery capacity can be improved.

Further, As the concentration of electrolyte salt, when the concentration of lithium ions relative to the nonaqueous solvent ranges from 0.4 mol/kg or more to 1.0 mo/kg, a good characteristic can be obtained. When the concentration of the electrolyte salt exceeds 1.0 mol/kg, the low temperature characteristic and the cyclic characteristic will be deteriorated. Further, when the concentration of the electrolyte salt is lower than 0.4 mol/kg, a sufficient capacity cannot be ensured. Still further, when imide salt is used, the low temperature characteristic or the battery capacity can be improved.

Since halogen substituted ethylene carbonate (for instance, fluorinated ethylene carbonate) is contained in the gel electrolyte according to the present invention, the chemical stability of the gel electrolyte relative to the negative electrode is high. Thus, the gel electrolyte battery of the invention employing the gel electrolyte excellent in its chemical and electrochemical stability can realize a battery excellent in and satisfying a battery capacity, a cyclic characteristic, a load characteristic and a low temperature characteristic. Especially, the gel electrolyte battery of the present invention is high in its charging and discharging efficiency and its discharging capacity of the battery.

The gel electrolyte battery of the present invention which realizes the excellent performances as mentioned above can extremely contribute to the progress of the industry associated with portable electronic devices.

## Claims

1. A gel electrolyte in which a nonaqueous electrolytic solution having a lithium-containing electrolyte salt dissolved in a nonaqueous solvent is gelled by a matrix polymer, wherein said gel electrolyte includes a halogen substituted ethylene carbonate obtained by replacing one or more hydrogen atoms of ethylene carbonate expressed by a chemical formula 1 as described below by halogens.

[Chemical Formula 1]

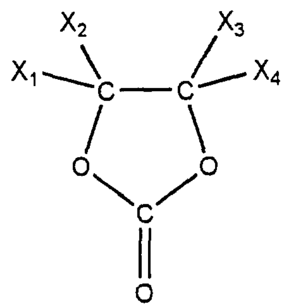

(In the formula, at least one of $X_1$, $X_2$, $X_3$ and $X_4$ is a halogen atom and the rest of them is composed of hydrogen atoms.)

2. The gel electrolyte according to claim 1, wherein said halogen is fluorine.

3. The gel electrolyte according to claim 1, wherein said nonaqueous solvent is a mixed solvent having one or more kinds selected from the group consisting of ethylene carbonate, propylene carbonate, dimethyl carbonate, ethylmethyl carbonate, diethyl carbonate, dipropyl carbonate, methylpropyl carbonate; ethylpropyl carbonate and ethylbutyl carbonate.

4. The gel electrolyte according to claim 1, wherein as said lithium-containing electrolyte salt, are included at least one or more kinds of $LiPF_6$, $LiBF_4$, $LiN(CF_3SO_2)_2$, $LiN(C_2F_5SO_2)_2$, $LiC(CF_3SO_2)_3$ and $LiC(C_2F_5SO_2)_3$ and said lithium-containing electrolyte salt is included in the nonaqueous solvent so that the concentration of salt relative to the nonaqueous solvent is located within a range from 0.4 mol/kg to 1.7 mol/kg.

5. The gel electrolyte according to claim 1, wherein as said matrix polymer, is used a polymer containing on a repetition basis at least one kind of polyvinylidene fluoride, polyethylene oxide, polypropylene oxide, polyacrylonitrile and polymethacrylonitrile.

6. The gel electrolyte according to claim 1, wherein, as said matrix polymer, is used a copolymer in which hexafluoro propylene is copolymerized to polyvinylidene fluoride at the rate of 7.5 % or lower relative thereto on the basis of a monomer weight ratio.

7. A gel electrolyte battery comprising:

a negative electrode having any one of lithium metal, lithium alloy or a carbon material with which lithium can be doped and/or dedoped;
a positive electrode having a compound oxide consisting of lithium and transition metal and
a gel electrolyte provided between said negative electrode and said positive electrode;
said gel electrolyte is a gel electrolyte of a type that nonaqueous electrolytic solution having a lithium-containing electrolyte salt dissolved in a nonaqueous solvent is gelled by a matrix polymer, and said gel electrolyte includes halogen substituted ethylene carbonate obtained by replacing one or more hydrogen atoms of ethylene carbonate expressed by a chemical formula 2 as described below by halogens.

[Chemical Formula 2]

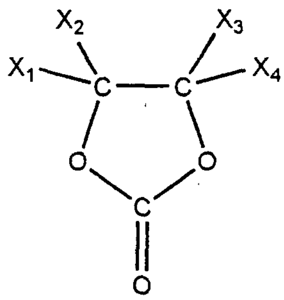

(In the formula, at least one of $X_1$, $X_2$, $X_3$ and $X_4$ is a halogen atom and the rest of them is composed of hydrogen atoms.)

**8.** The gel electrolyte battery according to claim 7, wherein said halogen is fluorine.

**9.** The gel electrolyte battery according to claim 7, wherein said nonaqueous solvent is a mixed solvent having one or more kinds selected from the group consisting of ethylene carbonate, propylene carbonate, dimethyl carbonate, ethylmethyl carbonate, diethyl carbonate, dipropyl carbonate, methylpropyl carbonate, ethylpropyl carbonate and ethylbutyl carbonate.

**10.** The gel electrolyte battery according to claim 7, wherein as said lithium-containing electrolyte salt, are included at least one or more kinds of $LiPF_6$, $LiBF_4$, $LiN(CF_3SO_2)_2$, $LiN(C_2F_5SO_2)_2$, $LiC(CF_3SO_2)_3$ and $LiC(C_2F_5SO_2)_3$ and said lithium-containing electrolyte salt is included in the nonaqueous solvent so that the concentration of salt relative to the nonaqueous solvent is located within a range from 0.4 mol/kg to 1.7 mol/kg.

**11.** The gel electrolyte battery according to claim 7, wherein as said matrix polymer, is used a polymer containing on a repetition basis at least one kind of polyvinylidene fluoride, polyethylene oxide, polypropylene oxide, polyacrylonitrile and polymethacrylonitrile.

**12.** The gel electrolyte battery according to claim 7, wherein, as said matrix polymer, is used a copolymer in which hexafluoro propylene is copolymerized to polyvinylidene fluoride at the rate of 7.5 % or lower relative thereto on the basis of a monomer weight ratio.

**13.** A gel electrolyte battery comprising:

a negative electrode having any one of lithium metal, lithium alloy or a carbon material with which lithium can be doped and/or dedoped;
a positive electrode having a compound oxide consisting of lithium and transition metal;
a gel electrolyte interposed between said negative electrode and said positive electrode and
an outer casing material composed of a laminate film;
wherein said gel electrolyte is a gel electrolyte of a type that nonaqueous electrolytic solution having a lithium-containing electrolyte salt dissolved in a nonaqueous solvent is gelled by a matrix polymer, and said gel electrolyte includes halogen substituted ethylene carbonate obtained by replacing one or more hydrogen atoms of ethylene carbonate expressed by a chemical formula 3 as described below by halogens.

[Chemical Formula 3]

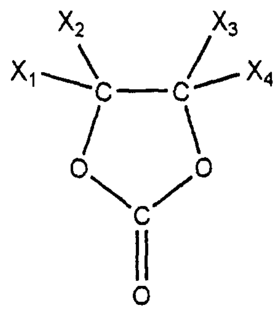

(In the formula, at least one of $X_1$, $X_2$, $X_3$ and $X_4$ is a halogen atom and the rest of them is composed of hydrogen atoms.)

**14.** The gel electrolyte battery according to claim 13, wherein said halogen is fluorine.

**15.** The gel electrolyte battery according to claim 13, wherein said nonaqueous solvent is a mixed solvent having one or more kinds selected from the group consisting of ethylene carbonate, propylene carbonate, dimethyl carbonate, ethylmethyl carbonate, diethyl carbonate, dipropyl carbonate, methylpropyl carbonate, ethylpropyl carbonate and ethylbutyl carbonate.

**16.** The gel electrolyte battery according to claim 13, wherein as said lithium-containing electrolyte salt, are included at least one or more kinds of $LiPF_6$, $LiBF_4$, $LiN(CF_3SO_2)_2$, $LiN(C_2F_5SO_2)_2$, $LiC(CF_3SO_2)_3$ and $LiC(C_2F_5SO_2)_3$ and said lithium-containing electrolyte salt is included in the nonaqueous solvent so that the concentration of salt relative to the nonaqueous solvent is located within a range from 0.4 mol/kg to 1.7 mol/kg.

**17.** The gel electrolyte battery according to claim 13, wherein as said matrix polymer, is used a polymer containing on a repetition basis at least one kind of polyvinylidene fluoride, polyethylene oxide, polypropylene oxide, polyacrylonitrile and polymethacrylonitrile.

**18.** The gel electrolyte battery according to claim 13, wherein, as said matrix polymer, is used a copolymer in which hexafluoro propylene is copolymerized to polyvinylidene fluoride at the rate of 7.5 % or lower relative thereto on the basis of a monomer weight ratio.

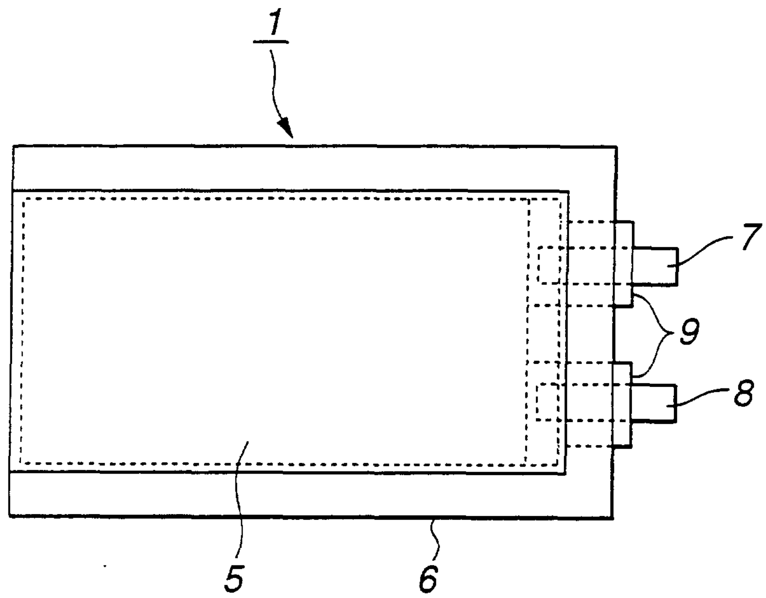


FIG.1

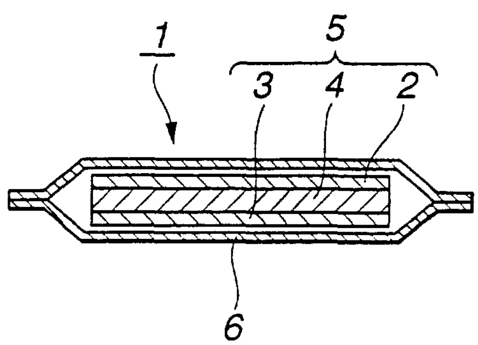


FIG.2

European Patent Office

# EUROPEAN SEARCH REPORT

Application Number
EP 01 11 0350

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>Y | EP 0 823 744 A (MITSUI PETROCHEMICAL IND)<br>11 February 1998 (1998-02-11)<br>* page 3, line 19 - page 5, line 8 *<br>* page 6, line 31 - page 7, line 16;<br>claims 1,3-10 *<br>--- | 1-5,7-11<br><br>6,12-18 | H01M10/40 |
| Y | EP 0 994 521 A (SONY CORP)<br>19 April 2000 (2000-04-19)<br>* page 3, line 50-57 *<br>* page 6, line 34-41; claims 1-18 *<br>--- | 6,12-18 | |
| X | EP 0 924 788 A (SHARP KK)<br>23 June 1999 (1999-06-23)<br>* page 3, line 17-38 *<br>* page 5, line 24-39; claims 1-4,7-13 *<br>--- | 1-5,7-11 | |
| X | US 5 529 859 A (MCMILLAN RODERICK S ET AL) 25 June 1996 (1996-06-25)<br>* claims 1-7 *<br>--- | 1,7 | |
| A | PATENT ABSTRACTS OF JAPAN<br>vol. 1996, no. 01,<br>31 January 1996 (1996-01-31)<br>& JP 07 240232 A (SONY CORP),<br>12 September 1995 (1995-09-12)<br>* abstract *<br>----- | 1,7 | TECHNICAL FIELDS SEARCHED (Int.Cl.7)<br>H01M |

The present search report has been drawn up for all claims

| Place of search | Date of completion of the search | Examiner |
|---|---|---|
| THE HAGUE | 5 September 2001 | De Vos, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 11 0350

This annex lists the patent family membersrelating to the patent documents cited in the above-mentioned European search report.
The members are as contained in the European Patent Office EDP file on
The European Patent Office is in no way liable for these particulars which are merely given for the purpose of information.

05-09-2001

| Patent document cited in search report | | Publication date | Patent family member(s) | | Publication date |
|---|---|---|---|---|---|
| EP 0823744 | A | 11-02-1998 | CA | 2212399 A | 07-02-1998 |
| | | | JP | 10177814 A | 30-06-1998 |
| | | | US | 5925283 A | 20-07-1999 |
| EP 0994521 | A | 19-04-2000 | JP | 2000123873 A | 28-04-2000 |
| | | | CN | 1251947 A | 03-05-2000 |
| EP 0924788 | A | 23-06-1999 | JP | 11172096 A | 29-06-1999 |
| US 5529859 | A | 25-06-1996 | US | 5571635 A | 05-11-1996 |
| JP 07240232 | A | 12-09-1995 | NONE | | |

EPO FORM P0459

For more details about this annex : see Official Journal of the European Patent Office, No. 12/82